# EUROPEAN PATENT APPLICATION

(11) **EP 1 827 022 A2**
(43) Date of publication of application: **29.08.2007**
(21) Application number: 06125564.2
(22) Date of filing: 07.12.2006
(51) Int. Cl.: H04N 7/24, H04N 5/44, H04N 7/26

(54) **Device for coding, method for coding, system for decoding, method for decoding video data**

(30) Priority: 12.12.2005 FR 0553837
(71) Applicant: Thomson Licensing, 92100 Boulogne-Billancourt (FR)
(72) Inventor: Fabre, Sylvain, 92648 Boulogne Cedex (FR); Pasquier, Frédéric, 92648 Boulogne Cedex (FR); Garnier, Bruno, 92648 Boulogne Cedex (FR)
(74) Representative: Le Dantec, Claude

(57) **Abstract**

The invention relates to a device and a method for coding video data. The device comprising means for coding each picture in slices of pictures, each slice being coded independently of the other slices. According to the invention, the device comprises means for inserting into the data stream at least one message (SEI) indicating the structure relating to the breakdown of the pictures into slices.

The invention also relates to a system for decoding and a method for decoding video data, the said video data having been coded in slices, each of the slices being coded independently of the other slices. According to the invention, the coding system comprises
- means for analysing the video data in order to ascertain the breakdown of the data into slices,
- means for decoding the video data slice by slice,
- means for reconstructing the various video data after they have been decoded in order to reconstruct the decoded video data.

Application to the H.264 standard

## Description

The invention relates to a device and a method for coding video data, a method and a system for decoding.

The present invention relates more particularly to the coding standards in which the coded pictures are transmitted with a certain number of information elements allowing them to be decoded easily.

The compression standards such as MPEG-2 and more recently H.264 transmit the coded pictures in the form of groups of pictures (GOP), the latter also comprising information describing the structure of the group of pictures, this information subsequently being used by the decoder for the decoding of the pictures.

The H.264 standard transmits the groups of pictures in structures of the slice type. A slice may contain either the whole of a picture or a portion of a picture. The encoder is responsible for breaking down the pictures into slices (most of the time based on a frozen configuration), but the decoder never in principle knows the slice structure of the pictures and discovers it therefore during the decoding process.

The slices are encapsulated in units of the NAL (Network Adaptation Layer) type.

The breakdown into slices advantageously makes it possible to insert additional synchronization points into the picture. Thus, if the transport layer introduces errors during the transfer of the NAL containing slice "0", the decoding may resume from slice "1". If the picture is not broken down into slices, then the decoder ignores the picture in its totality.

Most decoders use the same breakdown into slices for all the pictures of a complete video sequence but this is only a generalization and the breakdown is truly dependent on the coding device.

The inventors have established that, the slices being encoded independently of the decoder, they may therefore be easily decoded in parallel. Thus, a processor "0" may process the slice "0", a processor "1" may process the slice "1" and so on, so long as there are processors capable of working in parallel on the decoding. However, the breakdown into slices is not known at the decoder. Therefore this parallelization is impossible at the decoding since the decoder cannot predict the breakdown.

A simple solution consists in always using the same structure of breaking down into slices in the encoder. However, this involves several constraints. It is then necessary for this breakdown to be standardized for all the decoders complying with the standard if it is desired that all the coded streams can be decoded by any decoder on the market.

The invention proposes to solve at least one of the abovementioned disadvantages by proposing a solution allowing any coded stream to be decoded by any decoder.

Accordingly, the invention relates to a video data coding device comprising means for coding each picture in slices of pictures, each slice being coded independently of the other slices. According to the invention, the coding device comprises means for inserting into the data stream at least one message indicating the structure relating to the breakdown of the pictures into slices.

In this manner, the stream comprises the information relating to its structure. Advantageously, this makes it possible to have video data coded in a chosen manner by the coding device and not known to the decoding devices.

According to a preferred embodiment of the invention, the means for inserting the said message insert the said message for a group of pictures to be coded.

According to another embodiment of the invention, the means for inserting the said message insert the said message for each picture to be coded.

According to another aspect, the invention relates to a video data coding method comprising a step for coding each picture in slices of pictures, each slice being coded independently of the other slices. According to the invention, the coding method comprises a step for inserting into the data stream at least one message indicating the structure relating to the breakdown of the pictures into slices.

According to another aspect, the invention also relates to a video data decoding system, the said video data having been coded in slices, each of the slices being coded independently of the other slices. According to the invention, the system comprises:
- means for analysing the video data in order to ascertain the breakdown of the data into slices,
- means for decoding the video data slice by slice,
- means for reconstructing the various video data after they have been decoded in order to reconstruct the decoded video data.

According to a preferred embodiment of the invention, the video data decoding system comprises:
- a plurality of means for decoding the video data slice by slice,
- means for orienting the various slices towards the plurality of decoding devices according to their availability, so that a plurality of slices is decoded simultaneously.

Advantageously, the various slices may therefore be decoded in parallel, the whole picture being reconstituted when all the slices corresponding to one and the same picture have been decoded.

Preferably, the means for analysing the video data are capable of recognizing and extracting at least one message comprising the information relating to the breakdown into slices.

According to another aspect, the invention also relates to a video data decoding method, the said video data having been coded in slices, each of the slices being coded independently of the other slices. According to the invention, it comprises the steps
- for analysing the video data so as to ascertain the breakdown of the data into slices,
- for orienting the various slices towards video decoding methods, according to the availability of the various methods,
- for decoding the video data slices in parallel,
- for reconstructing the various video data after they have been decoded in order to reconstruct the decoded video data.

The invention will be better understood and illustrated by means of exemplary embodiments and of advantageous application, in no way limiting, with reference to the appended figures in which:
- Figure 1 represents a structure of the stream coded according to the invention,
- Figure 2 represents a coding device according to the invention,
- Figure 3 represents a decoding device according to the invention,
- Figure 4 represents a flowchart of analysis of the stream during the decoding of a GOP.

The modules represented in the various figures are functional units that may or may not correspond to physically distinguishable units. For example, these modules or some of them may be combined in a single component, or constitute functionalities of one and the same software program. On the other hand, certain modules may, where necessary, consist of separate physical entities.

The description below is based on a data coding complying with the H.264 standard. This exemplary embodiment is not limited to a coding of this type. The invention in effect relates to any type of coding in which the information is inserted into the stream in order to make it easier to use subsequently.

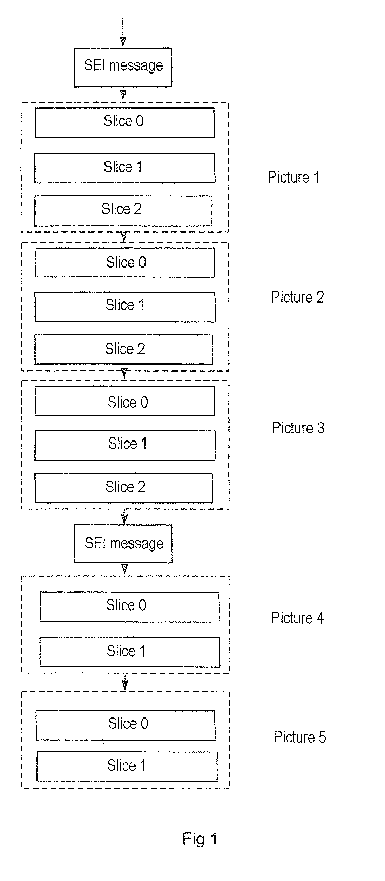

Figure 1 shows the structure of the stream coded according to a preferred embodiment of the invention.

The pictures are coded in a broken down manner. Each picture is broken down into sections better known as slices. The breakdown into slices is decided during the coding. This breakdown into slices is carried out by the users of the coding device and particularly by the broadcasters of programmes.

Each decoding device alone decides on the type of breakdown that it uses. Thus, the information concerning the breakdown used by the decoder is not known outside this decoder. Other devices may therefore not use this information for different purposes.

Thus, according to this embodiment, an SEI message is inserted before a group of several pictures. This SEI message indicates the breakdown into slices of the pictures of the group to which it relates. When the breakdown into slices of a new picture is different from the breakdown into slices of the preceding pictures, a new SEI message is inserted. Thus, a single SEI message is inserted for picture 0, picture 1 and picture 2. These three pictures are each broken down into three slices. A second SEI message is inserted for pictures 3 and 4. These two pictures are each broken down into two slices. If the pictures 5 and following are broken down differently from the picture 4, then a new SEI message is inserted before the slices of picture 5.

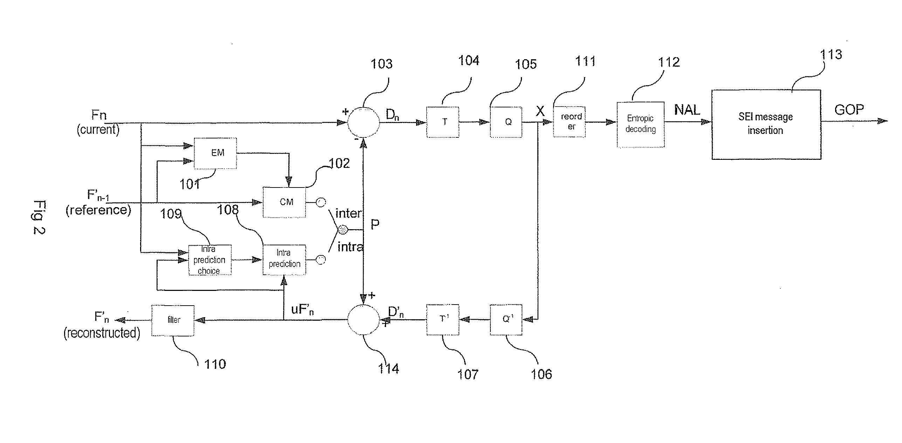

Figure 2 represents a coding device according to the preferred embodiment of the invention.

A current frame Fₙ is presented at the input of the coder to be coded therein. This frame is coded in a group of pixels called macroblocks, corresponding to groups of 16*16 pixels. Each macroblock is coded in intra mode or inter mode. Whether it is in intra mode or in inter mode, a macroblock is coded based on a reconstructed frame. A module 109 decides on the coding mode, in intra mode, of the current picture, according to the content of the picture. In intra mode, P (represented in Figure 2) consists of samples of the current frame Fn that have previously been coded, decoded and reconstructed (uF'n in Figure 2, u meaning unfiltered). In inter mode, P is made up of an estimate of movement based on one or more frames F'ₙ₋₁.

An estimate of movement module 101 establishes an estimate of movement between the current frame Fn and at least one previous frame F'n-1. Based on this estimate of movement, a movement compensation module 102 produces a frame P when the current picture Fn must be coded in inter mode.

A subtractor 103 produces a signal Dn, the difference between the picture Fn to be coded and the picture P. Then this picture is transformed by a DCT transformation in a module 104. The transformed picture is then quantized by a quantization module 105. Next, the pictures are reorganized by a module 111. An entropic coding module 112 of the CABAC (Context-based Adaptive Binary Arithmetic Coding) type then codes each picture.

Inverse transformation and quantization modules 106 and 107 respectively make it possible to reconstitute a difference D'n after transformation and quantization then inverse quantization and inverse transformation.

When the image is coded in intra mode, according to the module 109, an intra prediction module 108 codes the picture. A picture uF'n is obtained at the output of an adder 114, as the sum of the signal D'n and of the signal P. This module 108 also receives at the input the unfiltered reconstructed picture F'n.

A filtering module 110 makes it possible to obtain the reconstructed filtered picture F'n based on the picture uF'n.

The entropic decoding module 112 transmits the coded slices encapsulated in units of the NAL type. The NALs contain, in addition to the slices, information relating to the headers for example. The NAL type units are transmitted to a module 113. The module 113 inserts an SEI message before the transmission of the various coded pictures to a transmission network.

An SEI message is inserted in order to obtain a stream as indicated in Figure 1.

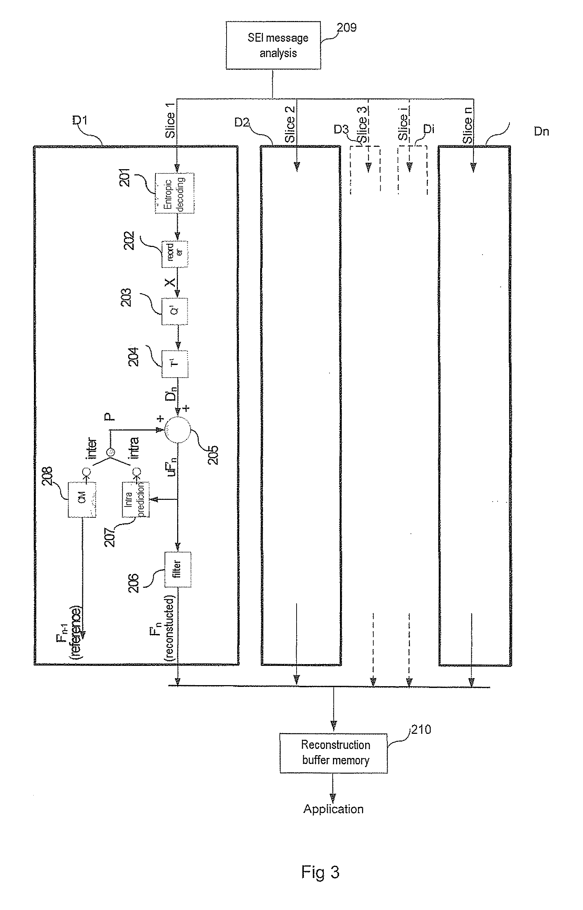

Figure 3 represents a decoding system according to the invention.

A module 209 analyses the SEI messages received in the data stream. The SEI messages may be of different kinds. Effectively, the SEI messages may be used for other purposes, for transporting other data that may be useful during the decoding.

After the analysis of the SEI message, the data are transmitted to various decoding devices D1, D2, D3, Di,..., Dn depending on the analysis. Effectively, depending on the available hardware or software configuration, one or more decoding devices D1, D2, D3, Di,..., Dn are available. It is advantageous that the number of decoding devices D1, D2, D3, Di,..., Dn is equal to the maximum number of slices of a coded picture. For example, if the pictures are coded using a breakdown into four slices, then it is particularly advantageous, in terms of decoding speed, that the slices are decoded in parallel to reconstruct the picture rapidly.

When the number of decoding devices D1, D2, D3, Di,..., Dn is less than the breakdown into slices of the pictures, then the slices are nevertheless decoded in parallel in the various decoding modules. The remaining slices will be decoded subsequently, as soon as a decoding device D1, D2, D3, Di,..., Dn is available. It is thus possible that, at an instant t, the various decoding modules are each decoding slices belonging to different pictures.

The orientation of the slices towards the various decoding modules is decided by the module 209. This orientation takes into account the availability of the various decoding modules, their number and the value indicated by the incoming SEI message. Effectively, if the SEI message indicates the value "3", it means that the picture or the pictures that will follow are broken down into three slices each. If three decoding modules are then available, the most favourable case for this group of pictures, each slice will then be transmitted to a decoding module D1, D2, D3.

The picture type NALs are transmitted to an entropic decoding module 201. The entropic decoding module 201 carries out the inverse operation of the module 112 of Figure 2. Then, the data are transmitted to a reordering module 202 in order to obtain a set of coefficients. These coefficients then undergo an inverse quantization in the module 203 and an inverse DCT transformation in the module 204 at the output of which the macroblocks D'n are obtained, D'n being a deformed version of Dn. A predictive block P is added to D'n, by an adder 205, to reconstruct a macroblock uF'n. The block P is obtained after compensation of movement, carried out by a module 208, of the preceding decoded frame, during a coding in inter mode or after intra prediction of the macroblock uF'n, by a module 207, in the case of a coding in intra mode. A filter 206 is applied to the signal uF'n to reduce the distortion effects and the reconstructed slice F'n is created from a series of macroblocks.

Once decoded by the various decoding modules D1, D2, D3, Di,..., Dn, the slices are placed one after the other to reconstruct the complete picture, for example by recording them in a reconstruction buffer memory 210, before being transmitted to the application.

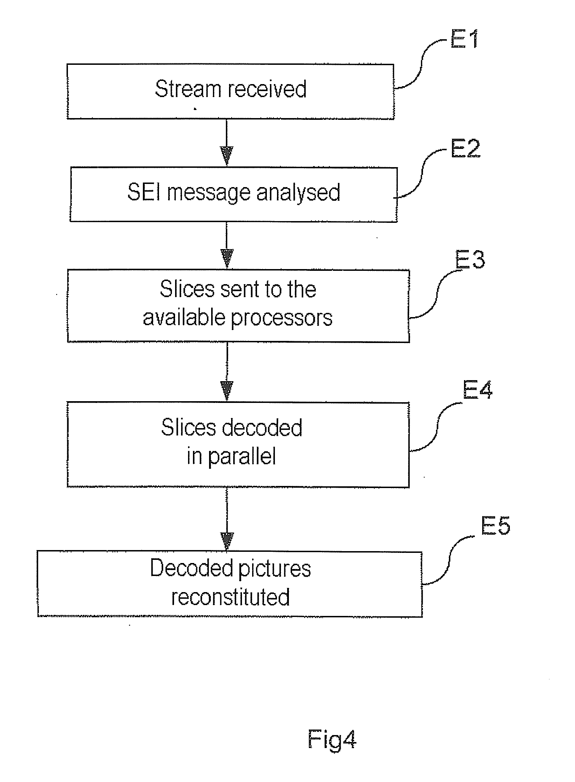

Figure 4 represents an embodiment of a method according to the invention, when the decoding operations are carried out by software.

During a step E1, the coded data stream is received with a coding device as represented in Figure 2. The coded stream has the structure shown in Figure 1. During a step E2, the SEI message is analysed. The analysis of the SEI message consists in looking to see whether the SEI message contains information on the breakdown of the pictures into slices. When this information is present, then the analysis of the SEI message is followed, during a step E3, by a decision on the orientation of the slices into the different decoding modules D1, D2, D3, Di,...,Dn. The decoding modules are also produced by software D1, D2, D3, Di,...,Dn.

During a step E4, the various slices are decoded by the various decoding modules in parallel.

During a step E5, the pictures are reconstituted, for example by using the reconstruction buffer memory 201 of Figure 3.

The table below illustrates the payload portion of an SEI message, using a type 6 payload, corresponding, in the H.264 standard, to a payload of the "user_data_unregistered" type, represented in the table below.

| user_data_unregistered( payloadSize ) { | Descriptor |
|---|---|
| uuid_iso_iec_11578 | u(128) |
| for( i = 16; i < payloadSize; i++ ) | |
| user_data_payload_byte | b(8) |
| } | |

- The 128-bit word "uuid_iso_iec_11578" indicates to the decoder the type of message during the decoding phase. The H.264 standard specifies a certain number of values for this word according to its meaning. One of these values indicates that it is a message of the "user_data_payload" type.
- The word "user_data_payload_byte" is an 8-bit word comprising a portion of the SEI message. This word is used to code the data relating to proprietary applications and particularly here for coding the data relating to the invention as coded below.

PayloadSize is equal to 17 bytes, 16 of which for UUID and one for user_data_payload_byte. In each user_data_unregistered there is a series of User_data_payload_byte bytes as indicated in the table above. This byte string is in fact a repetition of a 3-byte structure (2 bytes + 1 byte). The value of payloadsize is therefore a multiple of 3.

The word "user_data_payload_byte" makes it possible to code the number of slices in the picture and the size of each slice in macroblocks, the first byte representing the number of slices in the picture and the following two bytes making it possible to code the size of the slice in macroblocks, therefore using the 2 bytes + 1 byte structure mentioned hereinabove.

| Configuration_slice( payloadSize ) { | Descriptor |
|---|---|
| Number of slices | u(8) |
| for( i = 0; i <= number of slices; i++) | |
| Size of the slice in macroblocks | u(16) |
| } | |

Note that, if the decoding devices do not have an SEI message analysis module as described in the invention, then they are designed to ignore them, this being a particular request of the H.264 standard. Thus, the data may be decoded all the same, while not benefiting from the advantages that the invention may provide, namely in particular the parallel decoding of the various slices. In this way a certain compatibility with the decoders on the market is retained.

## Claims

1. Video data coding device comprising means for coding each picture in slices of pictures, each slice being coded independently of the other slices, **characterized in that** it comprises means for inserting into the data stream at least one message (SEI) indicating the structure relating to the breakdown of the pictures into slices.

2. Device according to Claim 1, **characterized in that** the means for inserting the said message insert the said message for a group of pictures to be coded.

3. Device according to Claim 2, **characterized in that** the means for inserting the said message insert the said message for each picture to be coded.

4. Video data coding method comprising a step for coding each picture in slices of pictures, each slice being coded independently of the other slices, **characterized in that** it comprises a step for inserting into the data stream at least one message (SEI) indicating the structure relating to the breakdown of the pictures into slices.

5. Video data decoding system, the said video data having been coded in slices, each of the slices being coded independently of the other slices, **characterized in that** it comprises
- means for analysing the video data in order to ascertain the breakdown of the data into slices,
- means for decoding the video data slice by slice,
- means for reconstructing the various video data after they have been decoded in order to reconstruct the decoded video data.

6. Video data decoding system according to Claim 5, **characterized in that** it comprises
- a plurality of means for decoding the video data slice by slice,
- means for orienting the various slices towards the plurality of decoding devices according to their availability, so that a plurality of slices is decoded simultaneously.

7. Decoding system according to one of Claims 5 or 6, **characterized in that** the means for analysing the video data are capable of recognizing and extracting at least one message comprising the information relating to the breakdown into slices.

8. Video data decoding method, the said video data having been coded in slices, each of the slices being coded independently of the other slices, **characterized in that** it comprises the steps
- for analysing the video data so as to ascertain the breakdown of the data into slices,
- for orienting the various slices towards video decoding methods, according to the availability of the various methods,
- for decoding the video data slices in parallel,
- for reconstructing the various video data after they have been decoded in order to reconstruct the decoded video data.
